(19) **Europäisches Patentamt European Patent Office Office européen des brevets**

(11) **EP 2 760 249 B1**

(12) **EUROPEAN PATENT SPECIFICATION**

(45) Date of publication and mention of the grant of the patent:
**23.10.2019 Bulletin 2019/43**

(51) Int Cl.:
**H04W 88/18** *(2009.01)*  **H04W 16/26** *(2009.01)*
**H04W 84/04** *(2009.01)*

(21) Application number: **13461501.2**

(22) Date of filing: **24.01.2013**

(54) **METHOD AND SYSTEM FOR DISTRIBUTING DATA PACKETS ON COMMUNICATION CHANNEL AND STATIONARY MODULAR TRANSCEIVER DEVICES FOR PERFORMING THE METHOD AND SYSTEM**

VERFAHREN UND SYSTEM ZUR VERTEILUNG VON DATENPAKETEN AUF EINEM KOMMUNIKATIONSKANAL UND STATIONÄRE MODULARE SENDER-EMPFÄNGER-VORRICHTUNGEN ZUR DURCHFÜHRUNG DES VERFAHRENS UND SYSTEMS

PROCÉDÉ ET SYSTÈME DE DISTRIBUTION DE PAQUETS DE DONNÉES SUR UN CANAL DE COMMUNICATION ET DISPOSITIFS ÉMETTEUR-RÉCEPTEUR MODULAIRES FIXES POUR APPLIQUER LE PROCÉDÉ ET LE SYSTÈME

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**30.07.2014 Bulletin 2014/31**

(73) Proprietor: **InterPhone Service Sp. z o.o.**
**39-300 Mielec (PL)**

(72) Inventors:
• **Dzialkowski, Dariusz**
**03-878 Warszawa (PL)**
• **Wolowczyk, Marek**
**03-878 Warszawa (PL)**
• **Rozek, Krzysztof**
**03-878 Warszawa (PL)**
• **Jarzabek, Rafal**
**03-878 Warszawa (PL)**

(74) Representative: **Wlasienko, Jozef**
**Polservice**
**Kancelaria Rzeczników**
**Patentowych Sp. z o.o.**
**Ul. Bluszczanska 73**
**00-712 Warszawa (PL)**

(56) References cited:
WO-A1-02/089373          WO-A2-2006/075294
WO-A2-2007/107890        WO-A2-2012/021517
DE-A1-102004 058 576     US-A1- 2002 059 615
US-A1- 2007 110 017

• Anonymous: "Ruckus MediaFlex 7211 Wi-Fi 2.4GHz 802.11n Outdoor Smart Bridge/Repeater (901-7211-UK10)", , 2 November 2012 (2012-11-02), XP055337733, Retrieved from the Internet: URL:https://web.archive.org/web/2012110211 1139/http://www.4gon.co.uk/ruckus-mediafle x-7211-outdoor-p-5374.html [retrieved on 2017-01-23]
• Anonymous: "Ethernet over coax - Wikipedia, the free encyclopedia", , 23 December 2012 (2012-12-23), XP055408317, Retrieved from the Internet: URL:https://web.archive.org/web/2012122306 5749/https://en.wikipedia.org/wiki/Etherne t_over_coax [retrieved on 2017-09-20]

## Description

### Field of the Invention

The subject matter of the invention relates to a method and system for distributing data packets on a communication channel and stationary modular transceiver devices that use in their structure said communication channel that serves in particular for the distribution of an Internet signal with simultaneous possibility of transmitting in said channel an audiovisual signal broadcasted by operators of satellite platforms, cable TV or terrestrial TV.

Generally, the present solution according to the invention is to provide bidirectional transmission of data packets, particularly, transmitted in wireless networks, such as GSM, 3G, 4G also called LTE in one-family and apartment buildings with the use of already existing installation, for example, satellite installation enhanced with the solution according to the invention. Obviously, this does not exclude applying completely new cables and suitably incorporating in the whole system the claimed stationary modular transceiver device in the form of an Indoor Unit IDU and an Outdoor Unit ODU.

### Description of the Prior Art

The prior art discloses solutions allowing to distribute data packets carried out, in particular, by installed modem devices, mostly by means of an USB port for stationary and/or portable devices, such as, for example, tablets, notebooks, and the like. Nevertheless, solutions of that kind also require installing software such as Connection Manager as well as drivers, which results in a number of potential problems. Generally, modems/routers are used for indoor applications and thus make it possible to use outdoor antennas to improve transmission parameters. The necessity to run dedicated cables and significant losses on antenna cables used for this purpose (about 2 - 6 dB losses / 10 mb or more of cable) make it difficult in practice to build efficient permanent installations in the case of this type of devices.

The U.S. Patent document No. US 5,592,491 discloses a wireless modem designed for a system and method for communicating between local subscriber units and a local base station repeater cell in a two-way communication interactive video network. In one embodiment, a modem is used to enable communications between a subscriber unit and a local base station repeater cell when the subscriber units are unable to receive rf transmissions from the local base station repeater cell. The local base station repeater cell is connected via a telephone line to a modem. Data communications are sent from the local base station repeater cell to the modem. The modem is also connected via an rf link to the subscriber unit. The modem then transmits the data communications received from the local base station repeater cell to the subscriber unit. Responses from the subscriber unit are then transmitted over the rf link from the subscriber unit to the modem. The modem then transmits the responses over the telephone line to the local base station repeater cell.

Furthermore, the U.S. Patent document No. US 7,778,230 discloses a wireless mobile router including a CPU and one or more network interfaces for hosting locally reachable devices. The router includes one or more cellular network interface devices configured to make a network connection with a cellular network. The router operates to translate data packets received from locally reachable devices and to direct the translated data packets to public IP address over the cellular network. Additionally, a stack of mobile routers includes two or more mobile routers interfaced together to make two or more network connections with the cellular network for increasing bandwidth and for load balancing network traffic passing from the router to the cellular network. The wireless mobile router and the stack are suitable for use in a mobile vehicle.

International application No. WO99/23825A1 further discloses a system and method for the delivery of digital video and data over a communication channel. The presented system for the delivery of digital video and data has been designed for delivering bidirectional services relating to digital video content, such as Internet data and plain old telephone service (POST) to an end user over a communication channel. In such system, the channel is usually the copper wire pair that extends between the telephone company central office and a residential premises.

In the prior art International application No. WO 2006/075294 A2 is also known which discloses an integrated, one-module device that communicates by means of WiFi or a cable with TV and/or WiFi (broadcast) signal sources. There is no communication with a cellular network and a communication antenna is located outside the device and is not part thereof. This solution relates to a communication device and a method of communication using a wireless communication protocol. A particular, but not exclusive, application of the invention is a communication device for transmitting a Wi-Fi signal via a wireless link or a wired link to another communication device.

In the prior art International application No. WO 2007/107890 A2 is also known which discloses a transmission method and an integrated one-module device for a cable TV network. It is not modular and cannot use an optimum signal quality of an outdoor cellular network and an optimum indoor WiFi quality. The device is not provided with an integrated antenna. It may be located only in one place at a time (indoor or outdoor). This solution relates generally to local area networks and more particularly to wireless and hard- wired local area network support.

Another International application No. WO2002/089373A1 discloses a new topology for Third Generation (3G) cellular radio networks like UMTS, CDMA2000 and the like, and a method which improves the in-building coverage and the total available capacity of Third Generation cellular or mobile radio network. Generally describes a system of mobile phone communication by means of cable TV network. Furthermore the document teaches how to connect a cellular network by means of a cable network and transmit the original GSM signal by cable (without changing the format thereof).

Furthermore, the prior art discloses systems for distributing data packets as presented in U.S. Patent document No. US 6,512,485 wherein a multiband reflector antenna has a main reflector defining a prime focus and a frequency selective surface (FSS) sub-reflector defining an image focus. One or more transmitter or receiver feeds are provided at each of the prime focus and image focus. In one application as a ground satellite terminal, the antenna supports Ka-band two-way broadband Internet access bundled with a multi-satellite Ku-band direct broadcast television service (DBS).

U.S. Paten document No. US 7,336,706 B2 discloses a programmable integrated Digital Sattelite Equipment Control (DiSEqC) transceiver device which represents another form of sharing the signal cable. The DiSEqC protocol is implemented in hardware, which provides a more reliable demodulation and improved robustness.

In the prior art U.S. Paten document No US2007/110017 is also known which discloses an integrated, one-module device which is a mobile router device that provides a network interface between locally reachable devices and a cellular network. In particular, the present invention relates to a plurality of mobile network routers stacked together and configured to establish a plurality of network connections with a cellular network.

Furthermore in the prior art a document DE 10 2004 058576 A1 is also known which also discloses an integrated, one-module device communicating via varying wired and wireless communication media in which wireless and wired communication connections in the outdoor area are provided by various outdoor providers and wherein these are linked to indoor connections using a universal adaptive interface unit. However this solution does not take into account the fact that the signals are processed in their optimal locations in terms of signal quality and strength.

Moreover in the prior art U.S. Patent Application No. US 2002/059615 A1 is known which discloses a cable broadcasting system for supplying broadcasting signals, via a transmission line, to a subscriber's terminal installed inside a building, as well as a head end unit and an indoor unit to be used in the cable broadcasting system. However the system does not change the format of source signals in their optimal locations in terms of signal quality and strength.

Furthermore the prior art International application No. WO2012/021517A2 entitled *"Customer premises equipment architecture for bundled services in a fixed broadband wireless installation"* which is considered as the closest prior art regarding claims 1, 5, 8 and 11, discloses that one or more network devices receive, at a location outside a customer premises, a broadband signal from a base station of a wireless network and a satellite television signal from a satellite antenna. The one or more network devices combine, at the location outside the customer premises, the broadband signal with the satellite television signal in a single coaxial cable and send, via the single coaxial cable, the broadband signal and the satellite television signal to one or more devices inside the customer premises wherein broadband signal and TV signal is based on the standard and possibilities provided by MoCA, which is the standard representing a basically different approach as compared to the solution proposed by the Applicant according to the invention.

## Summary of the Invention

The purpose of the present invention is to propose a new solution enabling distribution of data packets on a communication channel and stationary modular transceiver devices, in particular for distributing Internet signal with simultaneous possibility of transmitting on said channel an audiovisual signal broadcasted by operators of satellite platforms or cable TV or terrestrial TV, which does not obviously exclude distributing only the Internet signal.

One of basic features of the proposed solution according to the invention, which does not exclude other ones, is the use of already existing satellite or terrestrial or cable installation in order to improve the reception and range for radio modems. In particular, the new solution is intended to enable optimization of radio path losses for a modem and to enable placing an Outdoor Unit ODU at a point of potentially best radio signal reception thereby providing, among other things, end users with improved transmission parameters, and base stations - with broader range of radio signal.

In the light of problems presented above as to the prior art, there is a need to provide a method and system for distributing data packets on a communication channel that would enable interference-free transmission with definitely better parameters of both transmission and radio range in order to increase coverage, in particular for operators offering Internet access services.

The invention is defined by the subject-matter of the independent claims. Particular embodiments of the invention are set out in the dependent claims.

One advantage of the invention is that it provides a solution that ensures a several-times increase in the network range in the case of free space propagation due to a better radio range in relation to the base station, compared with the known prior art solutions, in particular with the solutions based on small devices that can be plugged into a USB port of a computer. For example, the solution according to the invention allows for over a four-times broader network range compared to the known mobile broadband modem - USB Huawei E398.

Another advantage of the solution according to the invention is the high quality of the signal resulting from direct visibility of the base station while taking into account weather conditions in the area where the solution is installed. Therefore, the solution of the present invention increases the effectiveness of the use of the base station thanks to the higher sensitivity of the device of the order of +3 dB, compared to the known solutions of the prior art, and better signal quality due to the above-mentioned direct visibility of the base station, which directly and indirectly leads to reduction in losses caused by the walls of buildings, or even to the lack of such losses. Additionally, an antenna integrated with the device reduces losses in signal strength by appoximately +3 to +6 dB, and an antenna system in the form of the so called "Smart Antenna System" results in an additioanl gain of the order of +5 dB, which leads to reduction in interference, better use of spectrum and to improved energy efficiency of the system. As a result, improved transmission parameters for the end user are obtained.

Furthermore, the solution according to the invention does not require installing software such as Connection Manager, as distinguished from the solutions known from the prior art, and the installation itself is very simple. This leads in consequence to simplification of the system and by the same to its increased failure-free operation, reliability, as well as its lower costs and better quality of the obtained connections.

The present invention also makes it possible to install the claimed solution with the already existing cable of satellite TV or terrestrial TV or cable TV (adapted to the frequency range from DC (0 Hz) to 2.5 GHz or to 6 GHz), and provides an unattended system, which in consequence significantly lowers the costs of its installation and its further operation. In other words, the users of satellite TV or cable TV or terrestrial TV are provided with an option for a simple extension of the existing installation by adding the function of distributing inside the building the access to the Internet available by means of WiFi protocol or electric signal without the necessity to run new cabling in a flat or building.

**Brief Description of the Drawings**

The subject matter of the invention is presented in an embodiment with reference to the enclosed figures wherein:

**FIG. 1** shows a schematic block diagram of connections between elements of the system for distributing data packets on a communication channel according to the invention;

**FIG. 2** shows a block diagram of a stationary modular transceiver device in the form of Outdoor Unit ODU and Indoor Unit IDU combined into a system for distributing data packets on a communication channel according to the invention;

**FIG. 3** shows a block diagram of a stationary modular transceiver device in the form of Outdoor Unit ODU and Indoor Unit IDU combined into a system for distributing data packets on a communication channel according to an embodiment of the invention;

**FIG. 4** is a general block diagram showing how the method for distributing data packets on a communication channel according to the invention is carried out;

**FIG. 5** shows a frequency map including frequency ranges for data packets transmitted in the provided communication channel according to the invention;

**FIG. 6** shows a minimum - maximum range provided by the stationary modular transceiver device according to the invention with relation to an original range resulting from solutions available in the prior art;

**Detailed Description of the Invention**

The subject matter of the invention is described in detail below with reference to the enclosed figures and an embodiment. The present embodiment, however, serves only as an example and the invention is not limited only to the embodiment presented herein.

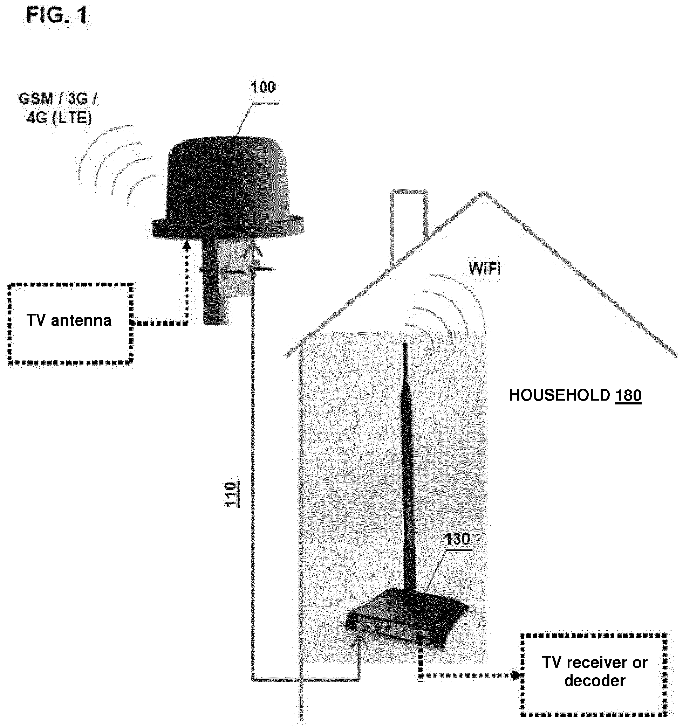

The embodiment presented in **FIG. 1** shows a diagram of connections between elements of the system for distributing data packets on a communication channel wherein the system according to the embodiment comprises a set consisting of a stationary modular transceiver device in the form of an Outdoor Unit ODU 100 and a stationary modular transceiver device in the form of an Indoor Unit IDU 130. The Outdoor Unit ODU 100 is each case mounted outside the building of a household 180. Such solution of the invention enables the Outdoor Unit ODU 100 to be directly visible (i.e. to be within radio range) when communicating outside the building with a base station BTS (not shown in said figures for the sake of simplicity), which means that there are no unnecessary limitations resulting from the location of the unit. The Outdoor Unit ODU 100 being in such location is directly connected to a transmission medium 110; in the embodiment, the transmission medium 110 is a coaxial cable of 75 $\Omega$ impedance that operates within the range from DC (0 Hz) to 2,5 GHz. Said coaxial cable at its other end is connected to the Indoor Unit IDU 130 located in the building of a household 180; the Indoor Unit IDU 130 is used for distribution of WiFi signal or electric signal after conversion into another data transmission standard.

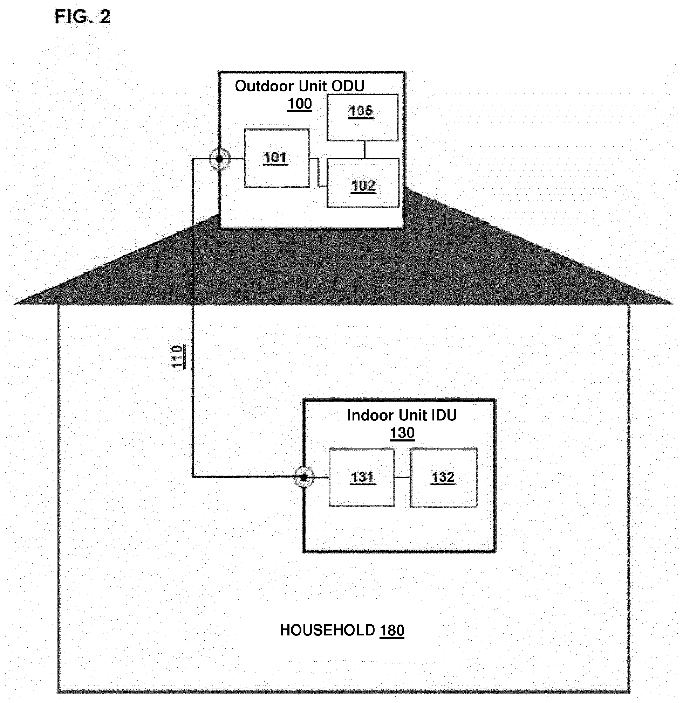

**FIG. 2** additionally presents more detailed characteristics of the logic of both the Outdoor Unit ODU 100 and the Indoor Unit IDU 130, which units are key elements of the claimed system. As regards the Outdoor Unit ODU 100, in the embodiment, it is provided with, incorporated in its structure, a module 102 with LTE cellular device 1800 and an access point integrated with a transmit-receive antenna 105, which in the present case is an LTE antenna, and a logic circuit 101 performing a dividing/summing of a radio signal coupled with said module 102; the module 102 and the logic circuit 101 are integrated with the logic of the Outdoor Unit ODU 100 and are located in a common weather-resistant housing outside the building of household 180.

The Indoor Unit IDU 130 has a module 132 of WiFi signal distribution unit integrated with a WiFi antenna and a logic circuit 131 performing a dividing/summing of a radio signal coupled with said module 132, the module 132 and the logic circuit 131 are integrated with the logic of the Indoor Unit IDU 130 and are located inside the building of household 180.

The above-characterized units, both the Outdoor Unit ODU 100 and the Indoor Unit IDU 130, are connected in series to a transmission medium 110, the direct connection in series being realized by means of the logic circuit 101 performing a dividing/summing of a radio signal on the side of the Outdoor Unit ODU 100, and by means of the logic circuit 131 performing a dividing/summing of a radio signal on the side of the Indoor Unit IDU 130.

Each time, said logic circuit 101 performing a dividing/summing of a radio signal on the side of the Outdoor Unit ODU 100 and the logic circuit 131 performing a dividing/summing of a radio signal on the side of the Indoor Unit IDU 130 in the presented embodiment is a diplexer. In the embodiment, this diplexer is a combination of two filters, a low-pass one and a high-pass one, with one common port. The low-pass filter bandwidth ends at the frequency of 2150 MHz whereas the high-pass filter bandwidth begins at the frequency of 2400 MHz. Moreover, the diplexer carries the DC component, which is necessary to power the amplifier in a terrestial antenna and to power LNB as well as to send commands controlling DiSEQ. It is necessary to point out here that the term "radio signal" used in the expression "logical circuit performing a dividing/summing of a radio signal" relates to modulated GSM and/or 3G and/or 4G signal into WiFi signal as well as to TV signals i.e. audiovisual signals comprising both satellite TV signal and/or digital TV signal and/or terrestrial TV signal.

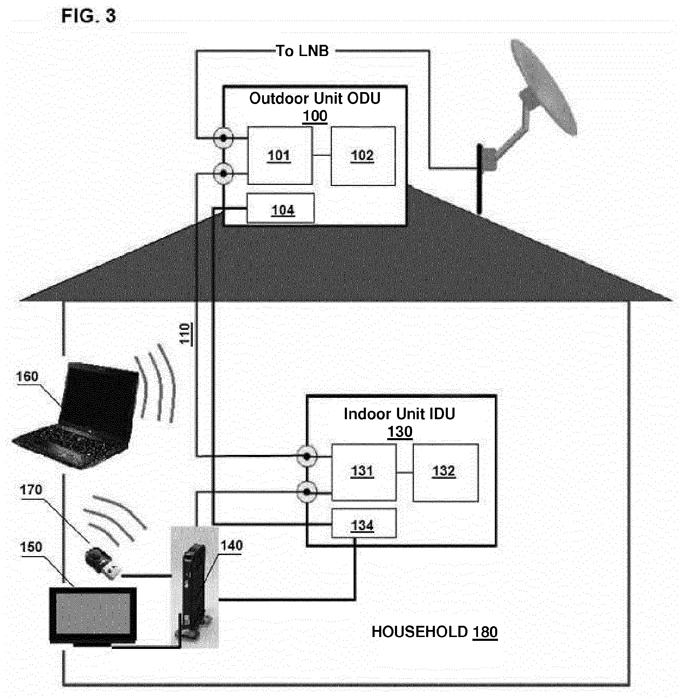

In the embodiment presented in **FIG. 3**, the logic of the Outdoor Unit ODU 100 and the logic of the Indoor Unit IDU 130 includes an additional Ethernet interface. In the case of the Outdoor Unit ODU 100 it is Ethernet 104 interface, and in the case of the Indoor Unit IDU 130 it is Ethernet interface 134. Said Ethernet interface 134 of the Indoor Unit IDU 130 is used for an alternative method of data packets transmission between ODU 100 and IDU 130 and from IDU 130 to the end user. Moreover, the Ethernet interface 134 on the side of the Indoor Unit IDU 130 additionally communicates with decoder 140, and in the present embodiment, decoder 140 is additionally connected with the Indoor Unit IDU 130 by means of logical circuit 131 incorporated in the unit, wherein logical circuit performs a dividing/summing of a radio signal. Thus, the Indoor Unit IDU 130 makes it possible, on the one hand, to broadcast WiFi signal by means of an WiFi antenna, located inside the household 180, for mobile devices, for example, a portable computer 160, and on the other hand, to deliver audiovisual signal, for example, to a TV receiver 150 connected to a satellite TV decoder 140. It is necessary point out here that the term "decoder 140" should be understood in a broader sense as a set-top box (STB), i.e. an electronic device connected to a TV receiver 150 which enables reproduction of video, sound, browsing internet sites, playing computer games, etc. Moreover, thanks to the connection of the Indoor Unit IDU 130 to the decoder 140, as illustrated in the above-mentioned figure, the Indoor Unit IDU 130 uses 12V power supply from the attached external power adapter.

The above-described units ODU 100 and IDU 130, by means of a transmission medium 110, form a communication channel of the claimed distribution system for transmitting data in LTE 1800 100 Mbps technology, using the already existing satellite installation, in order to enable data transmission to client WiFi antenna at the rate of up to 45 Mbps. Thus, the present solution based on the following two units: the Outdoor Unit ODU 100 and the Indoor Unit IDU 130 makes it possible to use in this specific case the already existing satellite installation for bidirectional transmission of data packets without jeopardizing its present functionality. Thus, the users of satellite TV (as well as of cable or terrestrial TV) are provided with a option for simple extending already existing installation by the addition of a new function of distributing the access to the Internet, by means of WiFi protocol, without the necessity to run new cables, which does not exclude the possibility of running them.

To summarize, the physical installation of a set in the form of an Outdoor Unit ODU 100 and an Indoor Unit IDU 130 may be carried out by extending the functionality of already existing TV, radio, cable or satellite installations based on copper wiring adapted to receive a satellite signal.

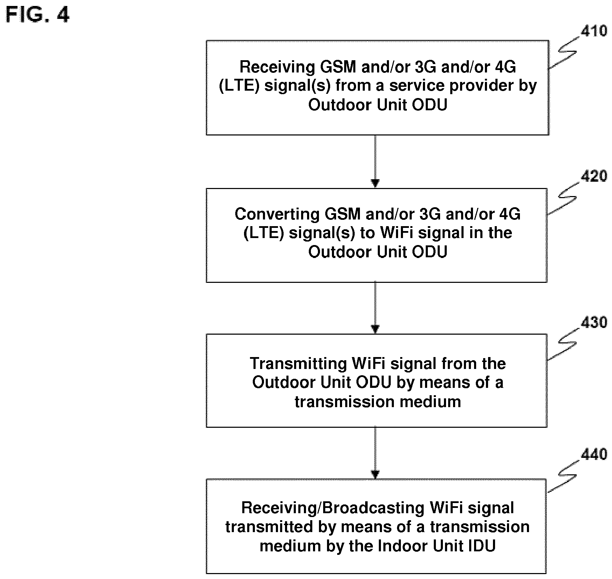

**FIG. 4** is a general block diagram showing how the method for distributing data packets on a communication channel according to the invention is carried out. The present method consists in particular in it that the Outdoor Unit ODU 100 located outside the building of a household 180 receives in step 410 a GSM and/or 3G and/or 4G signal from a service provider. Next, in step 420, the received GSM and/or 3G and/or 4G signal is converted into WiFi signal, the conversion being carried out through an access point integrated in module 102 of the Outdoor Unit ODU 100. Such GSM and/or 3G and/or 4G signal converted into WiFi signal is transmitted, in step 430, by means of a transmission medium 110 within the frequency range from 2400 MHz to 2485 MHz to the Indoor Unit IDU 130 located inside the building of a household 180; in the embodiment, said transmission medium 110 is a coaxial cable of satellite TV. Such received WiFi signal, in step 440, is subsequently broadcasted by means of an antenna mounted in the Indoor Unit IDU 130 in the rooms of the household 180.

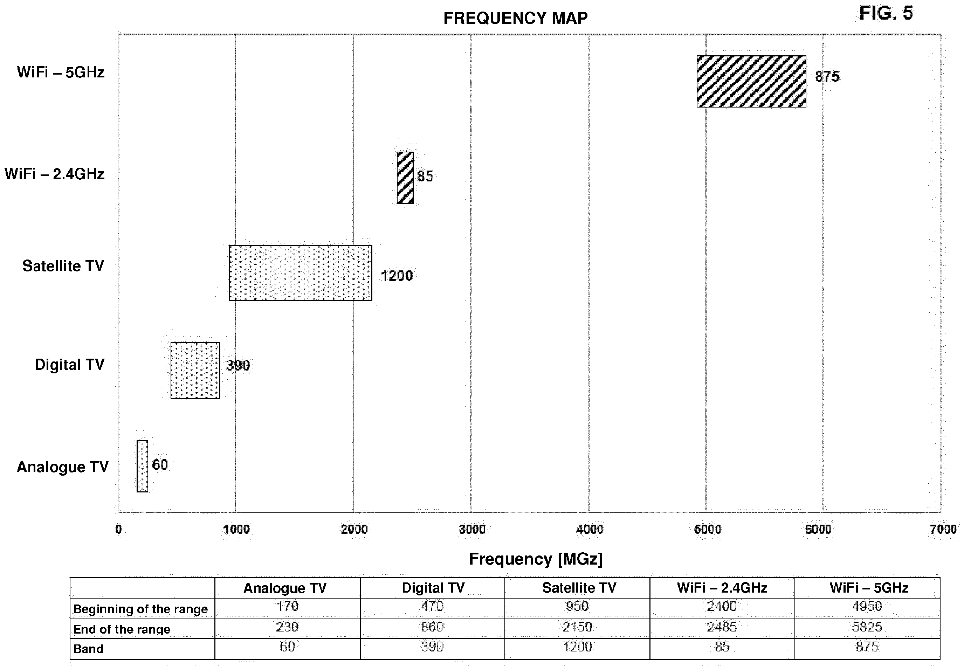

To better illustrate the used frequency range, **FIG 5** shows a frequency map including frequency ranges for data packets transmitted in the provided communications channel; enclosed in **FIG. 5** is also a table illustrating individual ranges of the transmitted WiFi signals and audiovisual signals. Thus, for WiFi signals marked as hatched areas in the figure - signal WiFi 2.4 GHz falls within the range from 2400 MGz to 2485 MGz and signal WiFi 5 GHz falls within the range from 4950 MGz to 5825 MGz. In the case of audiovisual signals marked as dotted areas in said figure the ranges are as follows: analogue TV signal falls within the range from 170 MHz to 230 MHz whereas digital TV signal falls within the range from 470 MHz to 860 MHz, and in turn satellite TV signal falls within the range from 950 MHz to 2150 MHz.

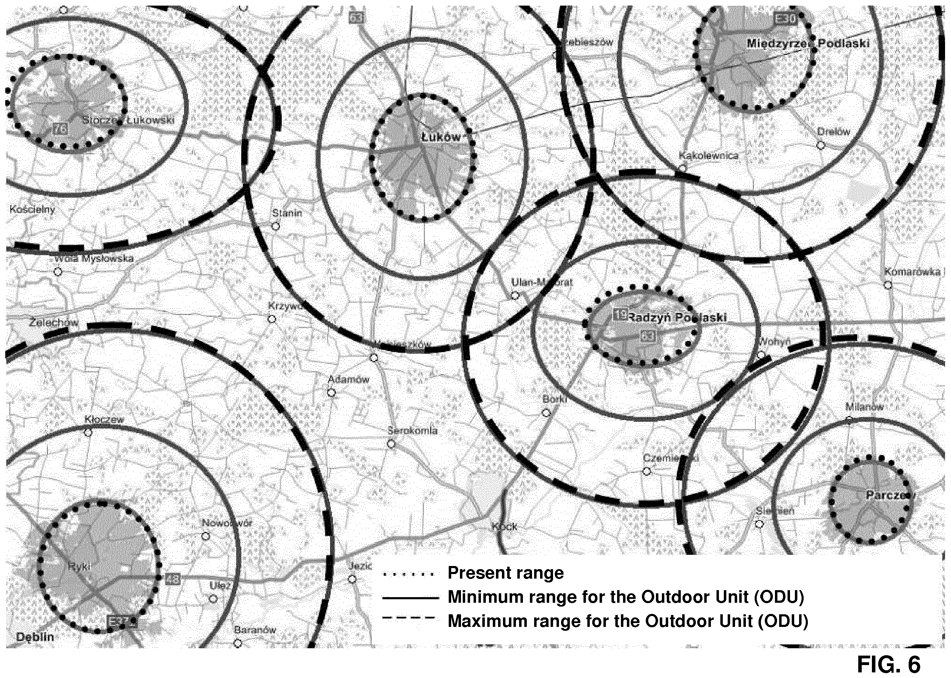

To summarize, the solution according to the invention guarantees total signal intensity which is better by 10 - 15 dB compared with known modems, and the obtained range is theoretically 2 - 5 times better, as presented below in Table 1 and Table 2 and illustrated in **FIG. 6** which shows the minimum and maximum range of a stationary modular transceiver referred to as the Outdoor Unit ODU 100 according to the invention. In the Figure, the solid line shows the minimum range for the Outdoor Unit ODU 100 compared with the present range marked with dotted line; the comparison shown has been made in relation to broadband modem - USB Huawei E398 available on the market. Thus, the minimum range of the Outdoor Unit ODU 100 according to the invention as compared to the said modem will be approximately twice as big as the present range. At the same time, the maximum range for the Outdoor Unit ODU 100 marked with a broken line in such case will be approximately 4-5 times bigger than the present range, marked with a dotted line, which represents available solutions of the prior art, including in particular currently manufactured modems, such as the above-mentioned exemplary broadband modem USB Huawei E398.

To better explain the depicted ranges of the stationary modular transceiver device in the form of an Outdoor Unit ODU 100, several values have been presented. On the basis of given Reference Signal Received Power (RSRP) values, the value of Received Signal Strength Indication (RSSI) is calculated according to the following formula:

$$\mathtt{RSSI[dBm]\ =\ RSRP[dBm]-20dB}$$

Suppression of free space for F ranging from 1700 MHz to 1900 MHz is T ranging from 125 dB to 126 dB, respectively.

Table 1

| RSRP [dBm] | DL [Mbit/s] | UL [Mbit/s] |
|---|---|---|
| -96 | 102,1 | 39,9 |
| -117 | 42,5 | 1,7 |

where:

**RSRP** - stands for Reference Signal Received Power;
**DL** - stands for bit rate for downlink;
**UL** - stands for bit rate for uplink;

A 21dB increase in suppression (where 20 dB indicates a 10-times increase in the distance from the base station BTS in the conditions of retaining visibility, i.e. in the absence of obstacles in radio link) from RSRP=-96 dBm to RSRP=-117 dBm results in bit rate for a downlink DL at the level of 42,5 Mbit/s.

From the above calculations it results that a signal level for the distance of 25 km will be -58 dBm. Taking into account correction that the operating power of the amplifier will be smaller by 7db, the sensitivity level will be -65 dBm RSSI. For sensitivity of -82dBm chipset reaches in DL: 95,5 Mbps and in UL: 28 Mbps

Thus, radio range depending on the Earth surface curvature is as follows:

Table 2

|  | D [m] | Rz [m] | h1-BTS [m] | h2-home [m] |
|---|---|---|---|---|
| **Option I** | 42 193,16 | 8 500 000,00 | 50,00 | 10,00 |
| **Option II** | 29 835,07 | 8 500 000,00 | 25,00 | 5,00 |

where

**D -** stands for the range from base station BTS;

**Rz -** stands for effective radius of the Earth;

**hl-BTS** - stands for the mounting height of base station antenna/antennas;

**h2-home** - stands for the mounting height of the Outdoor Unit ODU antenna/antennas;

The ranges presented in Table 2 for two options may be defined as follows:

➤ for Option I, which is most probable with relatively large mounting height of the Outdoor Unit ODU 100 outside the building of a household 180, the range of over 40 km from the base station BTS is obtained.

➤ for Option II, which is very pessimistic with relatively low mounting height of the Outdoor Unit ODU 100 outside the building of a household 180, the range of about 30km from the base station BTS is obtained.

The maximum bit rate, i.e. the speed at which digital signal flows through a communications channel, taking into account limitations of a WiFi router, is 40 - 45 Mbps. In accordance with this requirement such bit rate is obtained in order to increase suppression by additional 20 dB, which leads to obtain reserves of the order of 35 dB. The obtained 35 dB margin allows for compensation depending on weather conditions, obstacles, such as trees, and ability to receive reflected signals, which is guaranteed by the solution according to the invention.

Thus, the present solution according to the invention, using the technical means indicated above in FIGURES: **Fig. 1** to **Fig. 3**, offers a relatively simple solution relating to a system for distributing data packets on a communication channel based on a stationary modular transceiver device in the form of, on one side, an Outdoor Unit ODU mounted outside the building of a household and on the other side, an Indoor Unit IDU located inside building of the household.

The invention may be widely used for offering Internet access services with improved transmission parameters and greater area whereon the service offered by providers may be accessible. The solution according to the invention also provides end users, for example the users of satellite TV, with the option of simple installing of an Outdoor Unit ODU and an Indoor Unit IDU according to the invention, without the necessity to run new cabling in the household. The solution according to the invention is particularly useful in low one-family houses, which does not exclude the application of the present solution in housing estates.

The above description of the presented embodiment of the invention has been provided to enable a person skilled in the art to carry out or use the invention. The present embodiment may be modified to include changes, modifications and variants that fall within the scope of the invention and the enclosed patent claims. The basic rules presented herein may thus be applied in other embodiments without extending the scope of the invention. Therefore, the present invention is not intended to limit it to the presented embodiment but to provide it with the widest possible scope consistent with the new features presented therein.

**Claims**

1. A method for distributing data packets on a communication channel consisting in that it comprises a stage of communicating with a service provider in order to receive a GSM and/or 3G and/or 4G signal by a first module (102), wherein the first module and a first logic circuit (101) are integrated with the logic of a stationary modular transceiver device in the form of an Outdoor Unit ODU (100) located outside the building of a household (180), wherein the said GSM and/or 3G and/or 4G signal is converted into a WiFi signal through a cellular device and/or an access point integrated in the first module (102) with which is coupled the first logic circuit (101) performing a dividing/summing of the WiFi signal coupled with TV signals, and subsequently said WiFi signal is transmitted directly from the Outdoor Unit ODU (100) which is connected directly in series by means of a transmission medium (110) in the form of a coaxial cable to a second logic circuit (131) performing a dividing/summing of the WiFi signal coupled with TV signals, wherein the second logic circuit (131) being coupled with a second module (132) of WiFi signal distribution unit, wherein the second module (132) and the second logic circuit (131) are integrated with the logic of a stationary modular transceiver device in the form of an Indoor Unit IDU (130) located inside the building of the household (180) to form a communication interface for bidirectional transmission of data packets over the said transmission medium (110), wherein said the Indoor Unit IDU (130) by means of the said second module (132) of WiFi signal distribution unit broadcasts said WiFi signal within the building of a household (180) and/or additionally broadcasts the signal via available Ethernet interface by performing conversion into other data transmission standards.

2. The method according to claim 1 wherein the WiFi signal is transmitted by means of the transmission medium (110) within a frequency range from 0 MHz to 6 GHz, and in particular from 2400 MHz to 2485 MHz or from 4950 MHz to 5825 MHz.

3. The method according to claim 1, wherein the operation of the Outdoor Unit ODU (100) is controlled and/or monitored by means of the Indoor Unit IDU (130).

4. The method according to claim 1, wherein the WiFi signal alone and/or together with TV signals is transmitted by means of the transmission medium (110), each of the above-mentioned signals being transmitted within predetermined frequency ranges.

5. A stationary modular transceiver device in the form of an Outdoor Unit ODU (100) communicating with a service provider in order to receive a GSM and/or 3G and/or 4G signal by a first module module (102), wherein the first module and a first logic circuit (101) are integrated with the logic of the Outdoor Unit ODU (100), and such integrated device in the form of the Outdoor Unit ODU (100) located in a common weather-resistant housing is installed outside the building of a household (180), wherein the outdoor unit comprises the first module (102) which integrates a cellular device and/or an access point for converting said the GSM and/or 3G and/or 4G signal into a WiFi signal, at least one transmit-receive antenna (105), and a first logic circuit (101) performing a dividing/summing of the WiFi signal coupled with TV signals, wherein the first logic circuit (101) being coupled with said first module (102), and the said integrated device in the form of the Outdoor Unit ODU (100) is connected directly in series to a transmission medium (110) in the form of a coaxial cable by means of which the WiFi signal is transmitted directly to a second logic circuit (131) integrated with the logic of a stationary modular transceiver in the form of an Indoor Unit IDU (130) located inside the building of the household (180) to form a communication interface for bidirectional transmission of data packets over the said transmission medium (110).

6. Stationary modular transceiver device according to claim 5 wherein the at least one transmit-receive antenna (105) is a GSM and/or 3G and/or 4G antenna integrated with the logic of the Outdoor Unit ODU (100).

7. Stationary modular transceiver device according to claim 5 wherein the first logic circuit (101) performing a dividing/summing of a radio signal is a diplexer or a directional coupler.

8. A stationary modular transceiver device in the form of an Indoor Unit IDU (130) including a second module (132) and a second logic circuit (131) being integrated with the logic of the Indoor Unit IDU (130), and such integrated device in the form of the Indoor Unit IDU (130) is installed inside the building of a household (180), wherein it comprises the second module (132) of a WiFi signal distribution unit for broadcasting a WiFi signal within the building of the household (180) and/or additionally for broadcasting the signal via available Ethernet interface by performing conversion into other data transmission standards, further integrated with at least one transmit-receive antenna and the second logic circuit (131) performing a dividing/summing of the WiFi signal coupled with TV signals, wherein the second logic circuit (131) being coupled with said second module (132), and the said integrated device in the form of the Indoor Unit ODU (130) is connected directly in series to a transmission medium (110) in the form of a coaxial cable by means of which the WiFi signal is transmitted directly to a first logic circuit (101) integrated with the logic of a stationary modular transceiver in the form of an Outdoor Unit ODU (100) located outside the building of the household (180) to form a communication interface for bidirectional transmission of data packets over the said transmission medium (110).

9. The stationary modular transceiver device according to claim 8 wherein the at least one transmit-receive antenna is a WiFi antenna or a router with at least one WiFi antenna.

10. The stationary modular transceiver device according to claim 8 wherein the second logic circuit (131) performing a dividing/summing of a radio signal is a diplexer or a directional coupler.

11. A system for distributing data packets on a communication channel, wherein it comprises the stationary modular transceiver device in the form of the Outdoor Unit ODU (100) according to any one of the preceding claims 5-7, located outside the building of a household (180), which is connected directly in series by means of a transmission medium (110) in the form of a coaxial cable with the stationary modular transceiver device in the form of the Indoor Unit IDU (130) according to any one of the preceding claims 8-10, located inside the building of a household (180), to form a communication interface for bidirectional transmission of data packets over the said transmission medium (110).

12. The method according to claim 1 and the stationary modular transceiver devices according to claims 5 and 8 and also the system according to claim 11, wherein the coaxial cable is a coaxial cable of a satellite TV and/or terrestrial TV and/or cable TV.

13. The method according to claims 1 and 3 and the stationary modular transceiver device according to claim 5 and 6 and also the system according to claim 11 wherein the Outdoor Unit ODU (100) located outside the building of the household (180) is within the radio range of a base station BTS, wherein the radio range of the base station BTS in relation to the Outdoor Unit ODU (100) may increase as the mounting height of the Outdoor Unit ODU (100) increases.


**Patentansprüche**

1. Verfahren zum Verteilen von Datenpaketen in einem Kommunikationskanal, **dadurch gekennzeichnet, dass** es eine Kommunikationsstufe mit einem Dienstanbieter umfasst, um ein GSM- und/oder 3G- und/oder 4G-Signal durch ein erstes Modul (102) zu empfangen, wobei das erste Modul und eine erste Logikschaltung (101) in die Logik einer stationären modularen Transceiver-Vorrichtung in Form einer außerhalb des Einfamilienhauses (180) befindlichen Außeneinheit ODU (100) integriert sind, wobei das GSM- und/oder 3G- und/oder 4G-Signal durch ein Mobilfunkgerät und/oder einen in das erste Modul (102) integrierten Zugangspunkt, mit dem die eine Verteilung/Summierung des mit TV-Signalen gekoppelten WiFi-Signals durchzuführende erste Logikschaltung (101) gekoppelt ist, in ein WiFi-Signal umgewandelt wird, und anschließend das WiFi-Signal direkt von der Außeneinheit ODU (100), die mittels eines Übertragungsmediums (110) in Form eines Koaxialkabels direkt in Reihe mit einer zweiten Logikschaltung (131) geschaltet ist, die eine Verteilung/Summierung des mit TV-Signalen gekoppelten WiFi-Signals durchführt, übertragen wird, wobei die zweite Logikschaltung (131) mit einem zweiten Modul (132) der WiFi-Signalverteilungseinheit gekoppelt ist, wobei das zweite Modul (132) und die zweite Logikschaltung (131) in die Logik einer stationären modularen Transceiver-Vorrichtung in Form einer innerhalb des Einfamilienhauses (180) befindlichen Inneneinheit IDU (130) integriert sind, um eine Kommunikationsschnittstelle für die bidirektionale Übertragung von Datenpaketen über das Übertragungsmedium (110) zu bilden, wobei die Inneneinheit IDU (130) mittels des zweiten Moduls (132) der WiFi-Signalverteilungseinheit das WiFi-Signal innerhalb des Einfamilienhauses (180) sendet und/oder zudem das Signal über verfügbare Ethernet-Schnittstelle durch die Umwandlung in andere Datenübertragungsstandards überträgt.

2. Verfahren nach Anspruch 1, wobei das WiFi-Signal mittels des Übertragungsmediums (110) in einem Frequenzbereich von 0 MHz bis 6 GHz, und insbesondere von 2400 MHz bis 2485 MHz oder von 4950 MHz bis 5825 MHz übertragen wird.

3. Verfahren nach Anspruch 1, wobei der Betrieb der Außeneinheit ODU (100) mittels der Inneneinheit IDU (130) gesteuert und/oder überwacht wird.

4. Verfahren nach Anspruch 1, wobei das WiFi-Signal allein und/oder zusammen mit TV-Signalen mittels des Übertragungsmediums (110) übertragen wird, wobei jedes der oben erwähnten Signale innerhalb vorbestimmter Frequenzbereiche übertragen wird.

5. Stationäre modulare Transceiver-Vorrichtung in Form einer Außeneinheit ODU (100), die mit einem Dienstanbieter kommuniziert, um ein GSM- und/oder 3G- und/oder 4G-Signal durch ein erstes Modul (102) zu empfangen, wobei das erste Modul und eine erste Logikschaltung (101) in die Logik der Außeneinheit ODU (100) integriert sind, und ein solches integriertes Gerät in Form der in einem gemeinsamen wetterfesten Gehäuse befindlichen Außeneinheit ODU (100) außerhalb des Einfamilienhauses (180) installiert wird, wobei die Außeneinheit das erste Modul (102), das ein Mobilfunkgerät und/oder einen Zugangspunkt für die Umwandlung des GSM- und/oder 3G- und/oder 4G-Signals in ein WiFi-Signal integriert, mindestens eine Sende-/Empfangsantenne (105) und eine erste Logikschaltung (101), die eine Verteilung/Summierung des mit TV-Signalen gekoppelten WiFi-Signals durchführt, umfasst, wobei die erste Logikschaltung (101) mit dem ersten Modul (102) gekoppelt, und das integrierte Gerät in Form einer Außeneinheit ODU (100) direkt in Reihe mit einem Übertragungsmedium (110) in Form eines Koaxialkabels geschaltet ist, mittels dessen das WiFi-Signal direkt zu einer zweiten Logikschaltung (131) übertragen wird, die in die Logik eines stationären modularen Transceivers in Form einer innerhalb des Einfamilienhauses (180) befindlichen Inneneinheit IDU (130) integriert ist, um eine Kommunikationsschnittstelle für die bidirektionale Übertragung von Datenpaketen über das Übertragungsmedium (110) zu bilden.

6. Stationäre modulare Transceiver-Vorrichtung nach Anspruch 5, wobei die mindestens eine in die Logik der Außeneinheit ODU (100) integrierte Sende-/Empfangsantenne (105) eine GSM- und/oder 3G- und/oder 4G-Antenne ist.

7. Stationäre modulare Transceiver-Vorrichtung nach Anspruch 5, wobei die erste Logikschaltung (101), die eine Verteilung/Summierung eines Funksignals durchführt, ein Diplexer oder ein Richtkoppler ist.

8. Stationäre modulare Transceiver-Vorrichtung in Form einer Inneneinheit IDU (130) mit einem zweiten Modul (132) und einer zweiten Logikschaltung (131), die in die Logik der Inneneinheit IDU (130) integriert ist, und eine solche integrierte Vorrichtung in Form der Inneneinheit IDU (130) innerhalb des Einfamilienhauses (180) installiert ist, wobei sie das zweite Modul (132) einer WiFi-Signalverteilungseinheit zum Senden eines WiFi-Signals innerhalb des Einfamilienhauses (180) und/oder zusätzlich zur Übertragung des Signals über verfügbare Ethernet-Schnittstelle durch die Umwandlung in andere Datenübertragungsstandards umfasst, ferner mit mindestens einer Sende-Empfangs-Antenne und der zweiten Logikschaltung (131), die eine Verteilung/Summierung des mit TV-Signalen gekoppelten WiFi-Signals durchführt, integriert ist, wobei die zweite Logikschaltung (131) mit dem zweiten Modul (132) gekoppelt ist, und die integrierte Gerät in Form der Inneneinheit IDU (130) direkt in Reihe mit einem Übertragungsmedium (110) in Form eines Koaxialkabels geschaltet ist, mittels dessen das WiFi-Signal direkt zu einer ersten Logikschaltung (101) übertragen wird, die in die Logik eines stationären modularen Transceivers in Form einer außerhalb des Einfamilienhauses (180) befindlichen Außeneinheit ODU (100) integriert ist, um eine Kommunikationsschnittstelle für die bidirektionale Übertragung von Datenpaketen über das Übertragungsmedium (110) zu bilden.

9. Stationäre modulare Transceiver-Vorrichtung nach Anspruch 8, wobei die mindestens eine Sende-/Empfangsantenne eine WiFi-Antenne oder ein Router mit mindestens einer WiFi-Antenne ist.

10. Stationäre modulare Transceiver-Vorrichtung nach Anspruch 8, wobei die zweite Logikschaltung (131), die eine Verteilung/Summierung eines Funksignals durchführt, ein Diplexer oder ein Richtkoppler ist.

11. System zum Verteilen von Datenpaketen in einem Kommunikationskanal, umfassend eine stationäre modulare Transceiver-Vorrichtung in Form einer außerhalb des Einfamilienhauses (180) befindlichen Außeneinheit ODU (100) nach einem der vorhergehenden Ansprüche 5 bis 7, die mittels eines Übertragungsmediums (110) in Form eines Koaxialkabels mit der stationären modularen Transceiver-Vorrichtung in Form der innerhalb des Einfamilienhauses (180) befindlichen Inneneinheit IDU (130) nach einem der vorhergehenden Ansprüche 8-10 direkt in Reihe geschaltet ist, um eine Kommunikationsschnittstelle für die bidirektionale Übertragung von Datenpaketen über das Übertragungsmedium (110) zu bilden.

12. Verfahren nach Anspruch 1 und stationäre modulare Transceiver-Vorrichtung nach Ansprüchen 5 und 8 sowie auch System nach Anspruch 11, wobei das Koaxialkabel ein Satellitenfernsehen-Koaxialkabel und/oder ein Antennenfernsehen-Koaxialkabel und/oder ein Kabelfernsehen-Koaxialkabel ist.

13. Verfahren nach Ansprüchen 1 und 3 und stationäre modulare Transceiver-Vorrichtung nach Ansprüchen 5 und 6 sowie System nach Anspruch 11, wobei die außerhalb des Einfamilienhauses (180) befindliche Außeneinheit ODU (100) sich innerhalb der Funkreichweite einer Basisstation BTS befindet, wobei die Funkreichweite der Basisstation BTS in Bezug auf die Außeneinheit ODU (100) mit zunehmender Installationshöhe der Außeneinheit ODU (100) zunehmen kann.

## Revendications

1. Procédé de distribution de paquets de données sur un canal de communication, consistant en ce qu'il comprend une étape de communication avec un fournisseur de service afin de recevoir un signal GSM et /ou 3G et/ou 4G par un premier module (102), dans lequel le premier module et un premier circuit logique (101) sont intégrés à la logique d'un dispositif émetteur-récepteur modulaire stationnaire sous la forme d'une unité extérieure ODU (100) située à l'extérieur du bâtiment d'un menage (180), dans laquelle ledit signal GSM et/ou 3G et/ou 4G est converti en un signal WiFi par un appareil cellulaire et/ou d'un point d'accès intégré dans le premier module (102) auquel est couplé le premier circuit logique (101) effectuant une division/sommation du signal WiFi couplé à des signaux de télévision, et par la suit ledit signal WiFi est transmis directement à partir de l'unité extérieure ODU (100) qui est connectée directement en série au moyen d'un support de transmission (110) sous la forme d'un câble coaxial à un second circuit logique (131) effectuant une division/sommation du signal WiFi couplé à des signaux TV, dans lequel le second circuit logique (131) étant couplé à un second module (132) d'unité de distribution de signal WiFi, dans lequel le second module (132) et le second circuit logique (131) étant intégrés avec la logique d'un dispositif émetteur-récepteur modulaire stationnaire sous la form d'une unité intérieure IDU (130) situé à l'intérieur du bâtiment d'un menage (180) pour former une interface de communication pour la transmission bidirectionnelle de paquets de données sur ledit support de transmission (110), dans lequel ladite unité intérieure IDU (130) au moyen dudit second module (132) d'unité de distribution de signal WiFi diffuse ledit signal WiFi dans le bâtiment d'un menage (180) et/ou diffuse en outre le signal via une interface Ethernet disponible, en effectuant conversion dans d'autres normes de transmission de données.

2. Procédé selon la revendication 1, dans lequel le signal WiFi est transmis au moyen du support de transmission (110) dans une gamme de fréquences allant de 0 MHz à 6 GHz, et en particulier de 2400 MHz à 2485 MHz ou de 4950 MHz à 5825 MHz.

3. Procédé selon la revendication 1, dans lequel le fonctionnement de l'unité extérieure ODU (100) est contrôlé et/ou surveillé au moyen de l'unité intérieure IDU (130).

4. Procédé selon la revendication 1, dans lequel le signal WiFi seul et/ou avec des signaux de télévision est transmis au moyen du support de transmission (110), chacun des signaux susmentionnés est transmis dans des plages de fréquences prédéterminées.

5. Dispositif émetteur-récepteur modulaire stationnaire sous la forme d'une unité extérieure ODU (100) communiquant avec un fournisseur de services afin de recevoir un signal GSM et/ou 3G et/ou 4G par un premier module (102), dans lequel le premier module et un premier circuit logique (101) sont intégré à la logique de l'unité extérieure ODU (100), et un tel dispositif intégré sous la forme de l'unité extérieure ODU (100) située dans un boîtier commun résistant aux intempéries est installé à l'extérieur du bâtiment d'un menage (180), dans lequel l'unité extérieure comprenant le premier module (102) qui intègre un dispositif cellulaire et/ou un point d'accès pour convertir ledit signal GSM et/ou 3G et/ou 4G en un signal WiFi, au moins une antenne d'émission-réception (105) et un premier circuit logique (101) effectuant une division/sommation du signal WiFi couplé à des signaux de télévision, dans lequel le premier circuit logique (101) étant couplé audit premier module (102), et ledit dispositif intégré sous la forme de l'unité extérieure ODU (100) est connecté directement en série à un support de transmission (110) sous la forme d'un câble coaxial au moyen duquel le signal WiFi est transmis directement à un second circuit logique (131) intégré à la logique d'un émetteur-récepteur modulaire stationnaire sous la forme de l'unité intérieur IDU (130) située à l'intérieur du bâtiment d'un ménage (180) pour constituer une interface de communication pour la transmission bidirectionnelle de paquets de données sur ledit support de transmission (110).

6. Dispositif émetteur-récepteur modulaire stationnaire selon la revendication 5, dans lequel au moins une antenne émission-réception (105) est une antenne GSM et/ou 3G et /ou 4G intégrée à la logique de l'unité extérieure ODU (100).

7. Dispositif émetteur-récepteur modulaire stationnaire selon la revendication 5, dans lequel le premier circuit logique (101) effectuant une division/sommation d'un signal radio est un diplexeur ou un coupleur directionnel.

8. Dispositif émetteur-récepteur stationnaire modulaire sous la forme de l'unité intérieur IDU (130) comprenant un deuxième module (132) et un deuxième circuit logique (131) étant intégré à la logique de l'unité intérieur IDU (130), et tel dispositif intégré sous la forme de l'unité intérieur IDU (130) est installé à l'intérieur du bâtiment d'un ménage (180), dans lequel il comprend le deuxième module (132) d'une unité de distribution de signal WiFi pour la diffusion d'un signal WiFi dans le bâtiment d'un ménage (180), et/ou en outre pour la diffusion du signal via l'interface Ethernet disponible effectuant la conversion dans d'autres normes de transmission de données, en outre intégrées à au moins une antenne émission-réception et au second circuit logique (131) effectuant une division/sommation du WiFi signal couplé à des signaux de télévision, dans lequel le second circuit logique (131) étant couplé audit second module (132), et audit dispositif intégré sous la forme de l'unité intérieure IDU (130) est connecté directement en série à support de transmission (110) sous la forme d'un cable coaxial au moyen duquel le signal WiFi est transmis directement à un premier circuit logique (101) integre à la logique d'un emetteur-recepteur modulaire stationnaire sous la forme de l'unité exterieure ODU (100) situé à l'extérieur du bâtiment d'un ménage (180) pour former une interface de communication pour la transmission bidirectionnelle de paquets de données sur ledit support de transmission (110).

9. Dispositif émetteur-récepteur modulaire stationnaire selon la revendication 8, dans lequel au moins une antenne d'émission-réception est une antenne WiFi ou un routeur avec au moins une antenne WiFi.

10. Dispositif émetteur-récepteur modulaire stationnaire selon la revendication 8, dans lequel le second circuit logique (131) effectuant une division/sommation d'un signal radio est un diplexeur ou un coupleur directionnel.

11. Système de distribution de paquets de données sur un canal de communication, dans lequel il comprend le dispositif émetteur-récepteur modulaire stationnaire sous la forme de l'unité extérieure ODU (100) selon l'une quelconque des revendications précédentes 5 à 7, situé à l'extérieur du bâtiment d'un menage (180), qui est connecté directement en série au moyen d'un support de transmission (110) sous la forme d'un câble coaxial avec le dispositif émetteur-récepteur stationnaire modulaire sous la forme de l'unité intérieure IDU (130) selon l'un quelconque des les revendications précédentes 8 à 10, situées à l'intérieur du bâtiment d'un ménage (180), pour former une interface de communication pour la transmission bidirectionnelle de paquets de données sur ledit support de transmission (110).

12. Procédé selon la revendication 1 et les dispositifs émetteurs-récepteurs modulaires stationnaires selon les revendications 5 et 8 ainsi que le système selon la revendication 11, dans lesquels le câble coaxial est un câble coaxial d'une télévision par satellite et/ou d'une télévision terrestre et/ou un câble d'une télévision.

13. Procédé selon les revendications 1 et 3 et le dispositif émetteur-récepteur modulaire stationnaire selon les revendications 5 et 6, ainsi que le système selon la revendication 11, dans lesquels l'unité extérieure ODU (100) située à l'extérieur du bâtiment d'un ménage (180) est à l'intérieur de la portée radio de la station de base BTS, dans lequel la portée radio de la station de base BTS par rapport à l'unité extérieure ODU (100) peut augmenter lorsque la hauteur de montage de l'unité extérieure ODU (100) augmente.

# FIG. 1

GSM / 3G / 4G (LTE)

100

TV antenna

110

WiFi

HOUSEHOLD 180

130

TV receiver or decoder

## FIG. 2

Outdoor Unit ODU
100
105
101
102

110

Indoor Unit IDU
130
131  132

HOUSEHOLD 180

**FIG. 3**

To LNB

Outdoor Unit ODU
100

101   102

104

110

160

170

150

140

Indoor Unit IDU
130

131   132

134

HOUSEHOLD 180

**FIG. 4**

410

Receiving GSM and/or 3G and/or 4G (LTE) signal(s) from a service provider by Outdoor Unit ODU

420

Converting GSM and/or 3G and/or 4G (LTE) signal(s) to WiFi signal in the Outdoor Unit ODU

430

Transmitting WiFi signal from the Outdoor Unit ODU by means of a transmission medium

440

Receiving/Broadcasting WiFi signal transmitted by means of a transmission medium by the Indoor Unit IDU

FREQUENCY MAP

FIG. 5

WiFi – 5GHz — 875

WiFi – 2.4GHz — 85

Satellite TV — 1200

Digital TV — 390

Analogue TV — 60

Frequency [MGz]

|  | Analogue TV | Digital TV | Satellite TV | WiFi – 2.4GHz | WiFi – 5GHz |
|---|---|---|---|---|---|
| Beginning of the range | 170 | 470 | 950 | 2400 | 4950 |
| End of the range | 230 | 860 | 2150 | 2485 | 5825 |
| Band | 60 | 390 | 1200 | 85 | 875 |

EP 2 760 249 B1

Present range
Minimum range for the Outdoor Unit (ODU)
Maximum range for the Outdoor Unit (ODU)

FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5592491 A
- US 7778230 B
- WO 9923825 A1
- WO 2006075294 A2
- WO 2007107890 A2
- WO 2002089373 A1
- US 6512485 B
- US 7336706 B2
- US 2007110017 A
- DE 102004058576 A1
- US 2002059615 A1
- WO 2012021517 A2